# EUROPÄISCHE PATENTSCHRIFT

(11) **EP 1 835 184 B1**
(45) Veröffentlichungstag und Bekanntmachung des Hinweises auf die Patenterteilung: **31.12.2008**
(21) Anmeldenummer: 07004967.1
(22) Anmeldetag: 10.03.2007
(51) Int. Cl.: F16B 12/22, A47C 19/00

(54) **Eckverbindung für ein metallfreies Massivholzbett**
Corner connection for a metal-free bed made of solid wood
Connexion angulaire pour un lit en bois massif dépourvu de métal

(30) Priorität: 13.03.2006 DE 102006011457
(43) Veröffentlichungstag der Anmeldung: 19.09.2007
(73) Patentinhaber: Weyrauch, Ralf, 98574 Schmalkalden / OT Asbach / Thüringen (DE)
(72) Erfinder: Weyrauch, Ralf, 98574 Schmalkalden / OT Asbach / Thüringen (DE)

(56) Entgegenhaltungen:
- DE-A1- 10 103 798
- DE-U1-5202004 019 52

## Beschreibung

Die Erfindung betrifft eine Eckverbindung für ein metallfreies Massivholzbett.

Im Stand der Technik sind unterschiedlichste Eckverbindungen für Möbel aus Holz mehrfach vorgeschrieben, z.B. in DE 20 2004 019 525 U1.

So ist beispielsweise aus der GB 489,816 eine Eckverbindung bekannt bei der an den beiden Seitenteilen Zapfen derart mehrfach untereinander und versetzt zueinander angeordnet, dass diese über zwei im Fuß senkrecht angeordnete Längsnuten miteinander in Eingriff gebracht und verleimt werden können. Die beiden zueinander winklig angeordneten Seitenteile werden zudem mittels eines, in horizontalen Längsnuten der Seiteteile verleimten Eckriegels versteift. Der wesentliche Nachteil dieser Ausführungsform besteht dabei darin, da die einzelnen Bauteile dieser Verbindung stets miteinander verleimt werden müssen, dass ein einfacher Transport, eine platzsparende Zwischenlagerung sowie eine mehrfache Demontage der Möbel, wenn diese beispielsweise zeitweise nicht benötigt werden, nicht möglich ist.

Weiterhin ist aus der DE 33 03 650 C1 eine auf der vorgenannten Lösung aufbauende mehrfach Zapfenverbindung für Holzgestelle bekannt geworden bei der zur Erhöhung der Stabilität der Massivholz-Stollenkonstruktion, wie sie im Stand der Technik heute bei Tischen, Stühlen und Korpuselementen üblich ist; quadratische Mehrfachzapfen in zugeordnete runde zylindrische Mehrfachbohrungen, welche im Durchmesser kleiner als die Diagonalmaße der Zapfen sind, eingepresst und eingeleimt werden. Diese Lösung gewährleistet zwar eine ausreichende Stabilität, ist jedoch ebenso wie die vg. Bauform nicht demontierbar und kann somit weder einfach transportiert noch platzsparend zwischengelagert werden.

Aus der DE 30 01 706 A1 ist nun eine mehrfach zerlegbare Möbeleckverbindung bekannt. Hierbei handelt es sich um eine Eckverbindung für Seiten- und Querteile von Schubkastenzargen bei der zwischen den Quer- und Seitenteilen ein Eckelement als Verbindung angeordnet ist welches im rechten Winkel zueinander stehende Dübel und Durchgangsbohrungen aufweist. Die Dübel greifen in den Bohrungen eines der Seitenteile und in denen des Querteiles. In den Durchgangsbohrungen des Querteiles sind Schraubelemente angeordnet die im anderen Seitenteil greifen. Auf Grund der mittels einer derartigen Eckverbindung aus dem angeschraubten Seitenteil auf das Eckelement nur eingeschränkt übertragbaren Schubkräfte ist diese demontierbaren Lösung für den Einsatz bei Bettgestellen mit wesentlich höheren Schubbelastungen der Seitenteile nicht geeignet.

Eine weitere demontierbare, kraft- und formschlüssige, biegesteife Eckverbindung für Holzkonstruktionen ist aus der DE 34 13 000 C2 bekannt, bei dieser sind eine oder mehrere Holzplatten derart mit dem Riegel bzw. der Stütze verleimt sind, dass nach dem Verspannen der beiden Bauteile beispielsweise mit einer Durchgangsschraube im wesentlichen nur die aufgeleimten Holzplatten das aufzunehmende Biegemoment übertragen. Diese Eckverbindung ist zwar hoch belastbar und zudem demontierbar, doch für den Einsatz im Rahmen der Herstellung von metallfreien Bettgestellen nicht geeignet, da die Durchgangsschraube einerseits den optischen Gesamteindruck der Eckverbindung stört, und zudem der Endverbraucher in bestimmten Preisklassen gänzlich metallfreie Massivholzbetten wünscht. Zudem kann bei der vorgenannten Bauform der Eckverbindung auch nach dem Verspannen ein noch vorhandenes Arbeitspiel (selbst bei konischen Stirnflächen) nicht ausgeschlossen werden, welches dann beispielsweise unter dynamischer Belastung, u.a. bei schwellender Beanspruchung, zu einem "Knarren" der Eckverbindung führt.

Aus dem DE 84 15 135 U1 ist darüber hinaus eine Eckverbindung zum Verbinden der Stirnseiten von Bettseitenteilen mit einem Bettpfosten bekannt welche demontierbar ist und gleichzeitig ausschließlich aus Holz gefertigt werden kann. Bei dieser Lösung durchdringt ein in einer Bohrung in der Stirnseite eines der Bettseitenteile eingesetztes und eingeleimtes mit Holzgewinde versehenes Rundholz den Bettpfosten an dem rechtwinklig zur vg. Bohrung das andere Seitenteil mittels Federn befestigt ist. Der Bettpfosten wird bei dieser Lösung mittels einer Holzhutmutter gegen die Stirnseite des mit dem Holzgewinde versehenen Seitenteil verspannt. Diese Bauform hat jedoch aufgrund der offensichtlich deutlich überstehenden Holzhutmuttern wesentliche gestalterische Nachteile, da sich derartige Holzhutmuttern mit einer modernen eleganten Formgebung schwer in Einklang bringen lassen. Andererseits ist diese ausschließlich aus Holz gefertigte Eckverbindung zudem nur bedingt auf Biegung und Schub belastbar. Dabei wird insbesondere die zulässige Schubbelastung nahezu ausschließlich allein von der zulässigen Scherkraft der Rundhölzer bestimmt da die aus der Vorspannung der Holzgewindeschraubverbindung resultierende Reibkraft nicht ausreicht um weitere Schubbelastungen aufzunehmen.

Infolge der Holzgewindeschraubverbindung ist zudem ein ständiges "Nachspannen" stets zwingend erforderlich um das "Knarren" der Eckverbindung bei dynamischer Belastung zumindest in zumutbaren Grenzen zu halten.

Aus der im DE 85 35 593 U1 vorgeschlagene Lösung ist eine andere lösbare, ausschließlich aus Holz hergestellten Eckverbindung auch für einen Schlafplatz bekannt bei dem die beiden Seiteteile ebenflächig mit einer senkrechten Anlagefläche oder auf einer schrägen Anlagefläche angeordnet, und mittels eines als Zylinder oder Kegelstumpf ausgebildeten Bolzen verbunden sind. Bei dieser Ausführungsform ist bei ebenflächigen Anlageflächen zwar die vertikale Kraftübertragung von einem Seitenteil in das andere gewährleistet. Bei schrägen Anlageflächen jedoch ist diese von der zulässigen Scherbeanspruchung des Bolzens bzw. der zulässigen Lochleibung der Bolzenaufnahme im Seitenteil abhängig. Dabei ist die maximal zulässige Biegebeanspruchung zwischen den beiden Seitenteilen sehr stark eingeschränkt und ausschließlich von der zulässigen Scherbeanspruchung des nahe des kurzen Hebelarmes angeordneten Bolzens, bzw. von der zulässigen Lochleibung der Bolzenaufnahme im Seitenteil abhängig. Darüber hinaus ist die Befestigung eines Bettfußes an dieser Bauform nur mit erheblichen zusätzlichen Aufwand möglich.

Im DE 87 16 243 U1 wird ein Bausatz für ein demontierbares Holzbett vorgeschlagen der aufgrund der offensichtlich über den Fuß deutlich überstehenden Seitenteile auch wesentliche gestalterische Nachteile aufweist, die mit einer modernen eleganten Formgebung nur schwer in Einklang gebracht werden können.

Aus der DE 89 05 165 U1 ist ein weiteres metallfreies Massivholzbett, hier mit schwalbenschwanzförmigen Seitenteilen bekannt geworden wobei auf den schwalbenschwanzförmigen Seitenteilen analog einer Schwalbenschwanzführung formschlüssig Formholzelemente aufgeschoben werden. Diese bilden entweder die Bettfüße, die Eckverbindungen oder kleine Nachttische. Infolge des bei dieser Bauform zwingend erforderlichen Montagespieles ist unter dynamischer Belastung ein "Knarren" der vg. Eckverbindung nicht zu vermeiden. Zudem ist bei dieser Bauform der gestalterische Spielraum sehr stark eingeschränkt.

Im DE 94 11 665 U1 wird eine weitere Bauform einer Eckverbindung für metallfreie Massivholzbetten vorgestellt. Hierbei sind in den Fußelementen keilförmigen Schwalbenschwanzführungen angeordnet in denen die zugeordnet ausgebildeten Stirnseiten der Seitenteile verankert werden. Ein wesentlicher Nachteil dieser Lösung besteht darin, dass, da die Fußelemente mit den Querholmen stets stabil verbunden sind, einerseits ein hohes Transportvolumen, aber andererseits beispielsweise in Hotelbetrieben auch ein großes Lagervolumen bereit gestellt werden muss. Diese Betten können zwangsläufig mittels der Seitenteile nur in ihrer Länge jedoch nicht in ihrer Breite variiert werden können. Ein anderer Nachteil dieser Lösung resultiert aus der Verbindung zwischen dem Seiten- und dem Fußteil welche zwangsläufig zu einer starken Biegezugbeanspruchung der Seitenteile führt und dadurch die Belastbarkeit dieser Bettgestelle insbesondere bei schmalen Seitenteilen stark einschränkt. Darüber hinaus bleibt nach der Montage auch stets noch ein Teil des Sackloches sichtbar, so dass es beispielsweise für einen Hotelgast offensichtlich ist, dass er in einem "zerlegbaren" (beigestellten) Bett genächtigt hat.

In der DE 297 01 033 U1 wird eine weitere metallfreie Eckverbindung für Bettgestelle vorgestellt bei der am Bettpfosten eine schwalbenschwanzförmige Gratleiste mit einem darunter angeordneten Dübel angebracht ist. In den Stirnseiten der zugeordneten Seitenteile sind die entsprechend zugeordneten Nuten zur Aufnahme der jeweiligen Gratleiste sowie eine Aussparung zur Aufnahme des Dübels angeordnet. Ein wesentlicher Nachteil dieser Lösung besteht darin, dass die gesamte vertikale Belastung jedes Seitenteiles an jedem Fuß allein von jeweils nur einem Bolzen übertragen werden muss. Infolge des vor der schwalbenschwanzförmigen Nut liegenden Kraftangriffes am Bolzen wird dieser nicht nur auf Scherung sondern stets gleichzeitig auch sehr stark auf Biegung beansprucht. Zudem schränkt die in den Stirnseiten der Seitenteile angeordnete Nut der Gratleiste gleichzeitig auch sehr stark die zulässige Biegebeanspruchung der Seitenwangen ein, so dass diese metallfreie Eckverbindung für Bettgestelle zwar eine ästhetisch ansprechende Gestaltung ermöglicht jedoch nur begrenzt belastbar ist.

Die Aufgabe der Erfindung ist es nun eine neuartige Eckverbindung für ein metallfreies Massivholzbett zu entwickeln welche beispielsweise für Hotelbetriebe einen modularen Aufbau derart ermöglicht, dass bei minimalem Lagervolumen unterschiedliche Bettbreiten und Bettlängen entsprechend dem jeweiligen Bedarf einfach und schnell zusammengestellt werden können, ohne dass der Gast am Bettgestell die "Zerlegbarkeit" desselben optisch erkennen könnte, wobei gleichzeitig ein einfacher Transport, eine platzsparende Zwischenlagerung wie auch eine mehrfache Demontage und Montage selbst von Laien und ohne Werkzeug möglich sein muss, zudem soll die zu entwickelnde Eckverbindung im zusammengebauten Zustand stets sehr hoch belastbar sein und selbst bei einer dynamischen Belastung ein "Knarren" der Eckverbindung stets vermeiden, darüber hinaus soll die zu entwickelnde Eckverbindung in ästhetisch ansprechender Gestaltung mit moderner und eleganter Formgebung einfach und kostengünstig herstellbar sein und soll selbst unter sehr extremen Belastungs- und Einsatzbedingungen eine sehr hohe Lebensdauer aufweisen.

Erfindungsgemäß wird diese Aufgabe durch eine Eckverbindung für ein metallfreies Massivholzbett nach den Merkmalen des Hauptanspruches gelöst. Diese erfindungsgemäße Eckverbindung für ein metallfreies Massivholzbett mit Fußteil (1) und Seitenteilen (2) sowie im Fußteil (1) angeordneten Dübeln (3) und in den Seitenteilen, den Dübeln (3) des Fußteiles (1) zugeordnet angeordneten Einstecköffnungen (4) und/oder Führungsnuten (5), zeichnet sich dadurch aus, dass am oberen Ende des Fußteiles eine kastenförmige Aussparung (6) angeordnet ist in deren Seitenwänden (12) jeweils ein oder mehrere Dübel (3) angeordnet sind, wobei an der Stirnseite (7) eines der beiden dem Fußteil (1) zugeordneten Seitenteile (2) eine in seiner Breite der Breite der Stirnseite (7) des anderen Seitenteiles (2) entsprechende Ausfälzung (8) angeordnet ist, und an der Stirnseite (7) des anderen Seitenteiles (2) eine Nut (9) angeordnet ist.

Kennzeichnend ist in diesem Zusammenhang, dass endseitig der Nut (9) an dem mit der Nut (9) versehenen Seitenteil (2) ein mit der Ausfälzung (8) in Wirkverbindung tretender Sicherungszapfen (10) angeordnet ist, oder dass einerseits endseitig der Nut (9) an dem mit der Nut (9) versehenen Seitenteil (2) ein mit der Ausfälzung (8) in Wirkverbindung tretender Sicherungszapfen (10) und andererseits "gegenüberliegend" endseitig der Ausfälzung (8) an dem mit der Ausfälzung (8) versehenen Seitenteil (2) ein weiterer mit der Nut (9) in Wirkverbindung tretender Sicherungszapfen (10) angeordnet ist.

Erfindungswesentlich ist auch, dass an der Außenwand (11) des Seitenteiles (2) mit der stirnseitig angeordneten Ausfälzung (8) Einstecköffnungen (4) und/oder Führungsnuten (5) und an der Außenwand (11) des Seitenteiles (2) mit der stirnseitig angeordneten Nut (9) Führungsnuten (5) mit/ohne Einstecköffnung (4) angeordnet sind.

Erfindungsgemäß können als Dübel (3) zylindrische Dübel (3) eingesetzt werden, wobei an den Außenwänden (11) der Seitenteile (2) diesen zylindrischen Dübeln (3) zugeordnet Einstecköffnungen (4) / Führungsnuten (5) angeordnet sind.

Erfindungsgemäß ist aber auch, dass als Dübel (3) Gratdübel eingesetzt werden und dass diesen Gratdübel zugeordnet an den Außenwänden (11) der Seitenteile (2) Einstecköffnungen (4) angeordnet sind und diesen benachbart jeweils eine als Gratführung ausgebildete Führungsnut (5) angeordnet ist.

Diese erfindungsgemäße Eckverbindung für ein metallfreies Massivholzbett wird wie folgt montiert.

Zunächst wird das mit der Ausfälzung (8) versehene Seitenteil (2) in die kastenförmige Aussparung (6) derart eingesetzt, dass die an der Außenwand (11) des Seitenteiles (2) angeordneten Einstecköffnungen (4) und/oder Führungsnuten (5) an/in den an den Seitenwänden (12) der Aussparung (6) angeordneten Dübeln (3) derart positioniert sind, dass die Unterkante (13) des Seitenteiles (2) auf der Bodenfläche (14) der Aussparung (6) aufsitzt und dabei die vordere Stirnseite (7) des Seitenteiles (2) mit leichtem Führungsspiel an der anderen Seitenwand (12) der Aussparung (6) nahezu anliegt.

Anschließend wird das andere Seitenteil (2) an dessen Stirnseite (7) eine Nut (9) und endseitig dieser Nut ein Sicherungszapfen (10) angeordnet ist, mittels der an der Außenwand (11) dieses Seitenteiles (2) angeordneten Führungsnut/en (5) an den an den Seitenwänden (12) der Aussparung (6) angeordneten Dübeln (3) derart positioniert, dass wiederum die Unterkante (13) auch dieses Seitenteiles (2) auf der Bodenfläche (14) der Aussparung (6) aufsitzt wobei gleichzeitig der am oberen Ende der Nut (9) angeordnete Sicherungszapfen (10) in die Ausfälzung (8) des anderen Seitenteiles (2) vollständig eingreift (eintaucht). Während des Einschiebens des zweiten Seitenteiles (2) wird das zuerst montierte Seitenteil (2) an dessen rückwandseitigen Seitenwand der Aussparung (6) angepresst. Mit dem Eintauchen des Sicherungszapfens (10) in die Ausfälzung (8) des zuerst montierten Seitenteiles (2) wird nun auch das danach montierte Seitenteil (2) in der Ausfälzung (8) des ersten Seitenteiles verspannt und dabei gegen die diesem rückwandseitig benachbarte Seitenwand (12) gepresst. Gleichzeitig werden mittels dem in der Ausfälzung (8) verspannten Sicherungszapfens (10) beide Seitenteile (2) an die in diese hineinragenden, in der den jeweiligen Aussparungen (5) angeordneten Dübel (3) gepresst wodurch die miteinander in formschlüssigen Eingriff stehenden Bauteile (zwei Seitenteile und ein Fußteil) sicher und spielfrei miteinander verspannt werden.

Dabei kann, sofern die erfindungsgemäße Bauform einerseits endseitig der Nut (9) an dem mit der Nut (9) versehenen Seitenteil (2) ein mit der Ausfälzung (8) in Wirkverbindung tretenden Sicherungszapfen (10) und andererseits "gegenüberliegend" endseitig der Ausfälzung (8) an dem mit der Ausfälzung (8) versehenen Seitenteil (2) ein mit der Nut (9) in Wirkverbindung tretender zweiter Sicherungszapfen (10) angeordnet ist, diese vorgenannte spielfreie Verspannung noch zusätzlich gegen extreme dynamische Belastungen gesichert werden.

Auf Grund der erfindungsgemäßen Lösung wird dabei stets gewährleistet, dass jeder der Dübel (3) nur ausschließlich auf Scherung beansprucht werden kann. Zudem werden die hohen vertikalen Belastungen der Seitenteile (2) nicht über die Verbindungselemente wie beispielsweise Dübel sondern stets direkt von den Seitenteilen (2) in das Fußteil (1) übertragen.

Selbst Biegebelastungen werden infolge der erfindungsgemäßen Lösung stets großflächig von den miteinander in Wirkverbindung stehenden Bauteilen übertragen.

Somit ermöglicht die erfindungsgemäße Lösung, beispielsweise für Hotelbetriebe, einen modularen Aufbau derart, dass bei minimalem Lagervolumen unterschiedliche Bettbreiten und Bettlängen entsprechend dem jeweiligen Bedarf einfach und schnell zusammengestellt werden können, ohne dass diese "Zerlegbarkeit" der Gast am Bettgestell optisch erkennen könnte.

Darüber hinaus kann mittels der erfindungsgemäßen Eckverbindung jederzeit ein einfacher Transport und eine platzsparende Zwischenlagerung der Einzelteile gewährleistet werden.

Infolge der erfindungsgemäßen Lösung ist zudem ohne Werkzeug und selbst von Laien eine mehrfache Demontage und Montage jederzeit möglich.

Dabei ist die erfindungsgemäße Eckverbindung im zusammengebauten Zustand stets sehr hoch belastbar und weist selbst unter sehr extremen Belastungs- und Einsatzbedingungen selbst nach mehrfachen Montagen und

Demontagen eine gegenüber den bisherigen Lösungen des Standes der Technik wesentlich höhere Lebensdauer auf.

Aufgrund der spielfreien Verspannung wird dabei ein "Knarren" der erfindungsgemäßen Eckverbindung selbst bei einer dynamischer Belastung, wie beispielsweise einer schwellenden oder wechselnden Beanspruchung, stets vermieden.

Zudem kann die erfindungsgemäße Eckverbindung bei ästhetisch ansprechender Gestaltung und moderner, eleganter Formgebung sehr einfach und kostengünstig maschinell auch in Großserie hergestellt werden.

Eine Variante der erfindungsgemäßen Lösung besteht darin, dass als Dübel (3) zylindrische Dübel eingesetzt werden, wobei es bei dieser Ausführungsform der erfindungsgemäßen Lösung besonders vorteilhaft ist, wenn einerseits endseitig der Nut (9) an dem mit der Nut (9) versehenen Seitenteil (2) ein mit der Ausfälzung (8) in Wirkverbindung tretender Sicherungszapfen (10) und andererseits "gegenüberliegend" endseitig der Ausfälzung (8) an dem mit der Ausfälzung (8) versehenen Seitenteil (2) ein weiterer mit der Nut (9) in Wirkverbindung tretender Sicherungszapfen (10) angeordnet ist.

Eine weitere Variante der erfindungsgemäßen Lösung besteht nun darin, dass als Dübel (3) Gratdübel eingesetzt werden, und dass diesen Gratdübel zugeordnet an den Außenwänden (11) der Seitenteile (2) Einstecköffnungen (4), und diesen benachbart jeweils eine ais Gratführung ausgebildete Führungsnut (5) angeordnet ist.

Bei beiden vorgenannten Variante kommen die alle Vorteile der erfindungsgemäßen Eckverbindung für ein metallfreies Massivholzbett besonders deutlich zum Tragen.

Weitere Merkmale, Einzelheiten und Vorteile der Erfindung ergeben sich neben dem Wortlaut der Ansprüche auch aus den nachfolgenden Erläuterungen zum Ausführungsbeispiel.

Die Erfindung soll nun an zwei Ausführungsbeispielen in Verbindung mit vier Darstellungen näher erläutert werden.

Dabei zeigt die
- Figur 1 :: die einzelnen Baugruppen der erfindungsgemäße Eckverbindung für ein metallfreies Massivholzbett in einer räumlichen Darstellung von außen,
- Figur 2 :: die einzelnen Baugruppen der erfindungsgemäße Eckverbindung für ein metallfreies Massivholzbett mit einem Sicherungszapfen 10 und Gratdübeln in einer räumlichen Darstellung von innen,
- Figur 3 :: die erfindungsgemäße Eckverbindung für ein metallfreies Massivholzbett nun im fertig montierten Zustand ebenfalls in der räumlichen Darstellung von innen, sowie
- Figur 4 :: die einzelnen Baugruppen einer weiteren Bauform der erfindungsgemäße Eckverbindung für ein metallfreies Massivholzbett mit zwei Sicherungszapfen 10 und zylindrischen Dübeln in einer räumlichen Darstellung von innen.

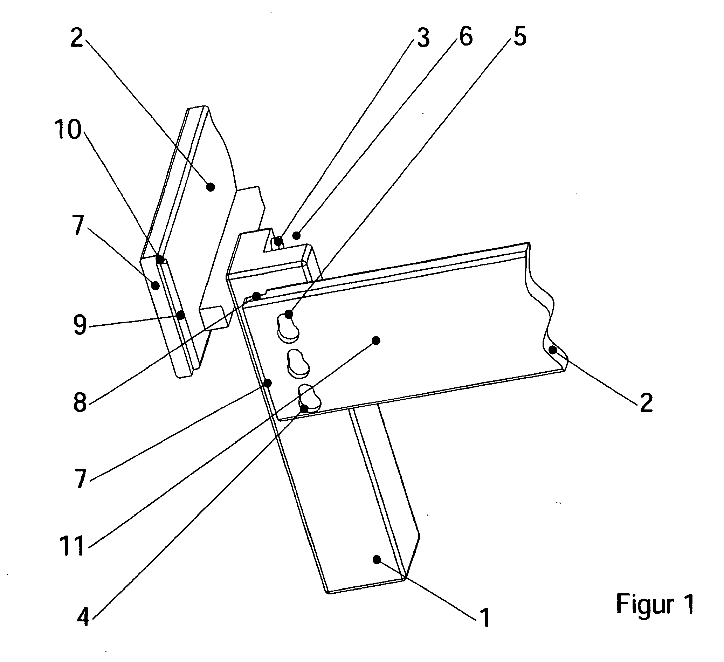

In der Figur 1 sind die einzelnen Baugruppen der erfindungsgemäße Eckverbindung für ein metallfreies Massivholzbett räumlich in der Ansicht von "Außen", mit dem Fußteil 1 und zwei Seitenteilen 2 dargestellt.

Im oberen Ende des Fußteiles 1 ist eine kastenförmige Aussparung 6 angeordnet.

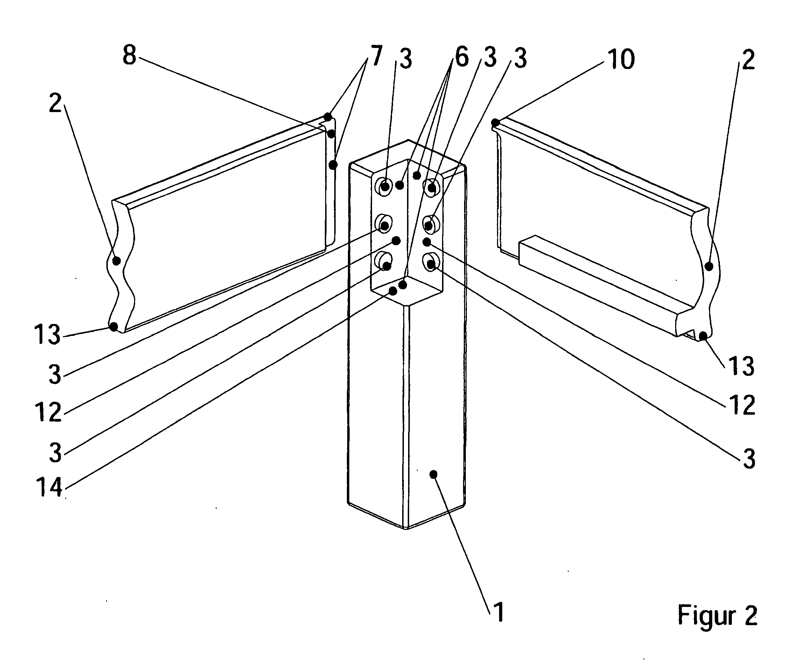

In den Seitenwänden 12 (siehe Figur 2) dieser kastenförmigen Aussparung 6 sind Dübeln 3 angeordnet. Bei der hier dargestellten Ausführung der erfindungsgemäßen Lösung sind als Dübel 3 Gratdübel eingesetzt.

In den Außenwänden 11 der Seitenteilen 2 sind diesen Dübeln 3 des Fußteiles 1 zugeordnet, Einstecköffnungen 4 und Führungsnuten 5 in Form von Gratführungen angeordnet.

An der Stirnseite 7 eines der beiden Seitenteile 2 ist eine in ihrer Breite der Breite der Stirnseite 7 des anderen Seitenteiles 2 entsprechende Ausfälzung 8 angeordnet.

An der Stirnseite 7 des anderen Seitenteiles 2 ist eine Nut 9 mit einem endseitig angeordneten Sicherungszapfen 10 angeordnet.

Die Figur 2 zeigt dabei die einzelnen Baugruppen der erfindungsgemäßen (in der Figur 1 dargestellten) Eckverbindung für ein metallfreies Massivholzbett mit einem Sicherungszapfen 10 und Gratdübeln in einer räumlichen Darstellung von "Innen".

Es soll nun die Montage der in den Figuren 1 und 2 dargestellten Bauteile erläutert werden.

Zunächst wird das mit der Ausfälzung 8 versehene Seitenteil 2 in die kastenförmige Aussparung 6 des Fußteiles 1 derart eingesetzt, dass die an der Außenwand 11 des Seitenteiles 2 (siehe Figur 1) angeordneten Einstecköffnungen 4 und Führungsnuten 5 an den an den Seitenwänden 12 der Aussparung 6 angeordneten Dübeln 3 (Gratdübeln) derart positioniert sind, dass die Unterkante 13 des Seitenteiles 2 auf der Bodenfläche 14 der Aussparung 6 aufsitzt und dabei die vordere Stirnseite 7 des Seitenteiles 2 mit leichtem Führungsspiel an der benachbarten Seitenwand 12 der Aussparung 6 anliegt.

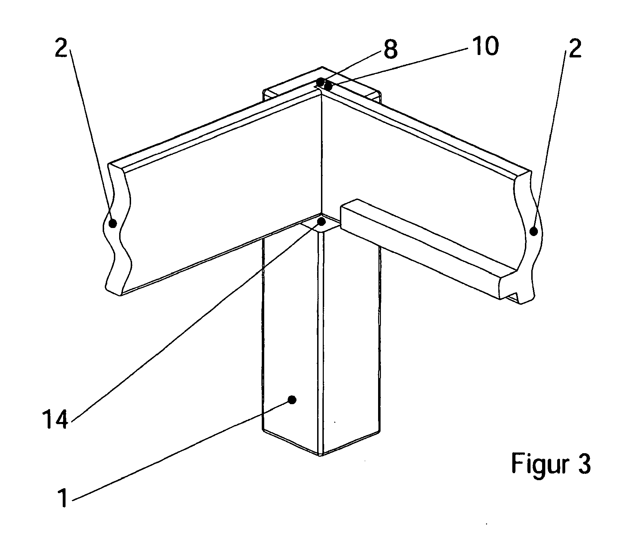

Anschließend wird das andere, an der Stirnseite 7 mit einer Nut 9 und einem Sicherungszapfen 10 (siehe Figur 1) versehene Seitenteil 2, mittels der auch an der Außenwand 11 dieses Seitenteiles 2 angeordneten Einstecköffnungen 4 und Führungsnuten 5, an den an der anderen Seitenwand 12 der Aussparung 6 des Fußteiles 1 angeordneten Dübel 3 (Gratdübel) derart positioniert, dass wiederum die Unterkante 13 auch dieses Seitenteiles 2 auf der Bodenfläche 14 der Aussparung 6 aufsitzt und dabei gleichzeitig der am oberen Ende der Nut 9 angeordnete Sicherungszapfen 10 in die Ausfälzung 8 des zuerst montieren Seitenteiles 2, wie in der Figur 3 dargestellt, eingreift.

Während des Einschiebens dieses zweiten Seitenteiles wird das zuerst montierte Seitenteil 2 an die diesem benachbarte rückwandseitigen Seitenwand 12 der Aussparung 6 gedrückt.

Mit dem Eintauchen des Sicherungszapfens 10 in die Ausfälzung 8 des zuerst montierten Seitenteiles 2 wird das als zweites montierte Seitenteil 2 in der Ausfälzung 8 verspannt.

Bei der Verspannung des Sicherungszapfens 10 in der Ausfälzung 8 werden gleichzeitig beide Seitenteile 2 an die in diese hineinragenden, in der Aussparung 5 angeordneten Dübel 3 gepresst, wodurch die miteinander in formschlüssigen Eingriff stehenden Bauteile sicher und spielfrei miteinander verspannt werden.

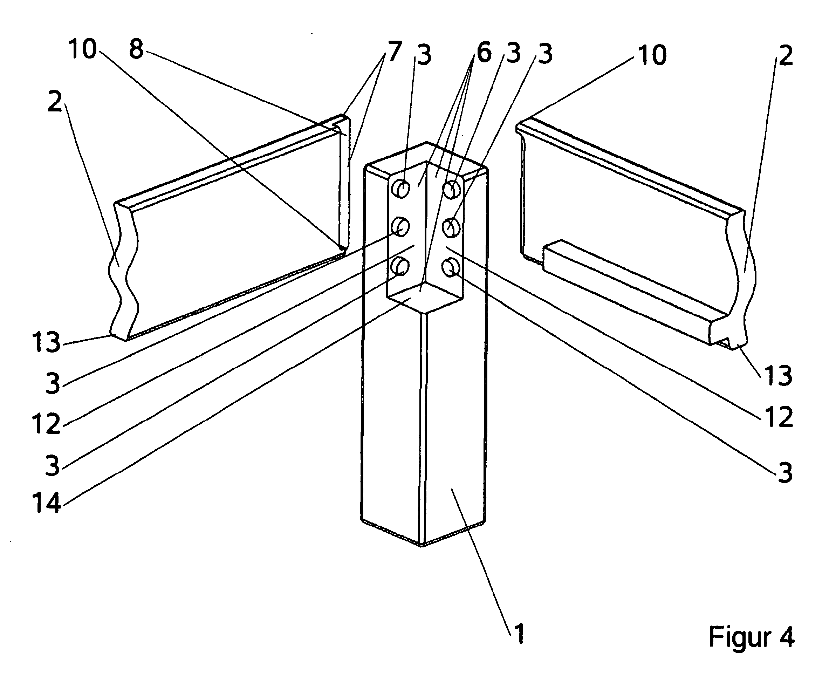

Die Figur 4 zeigt nun die einzelnen Baugruppen einer weiteren Bauform der erfindungsgemäße Eckverbindung für ein metallfreies Massivholzbett mit zylindrischen Dübeln und zwei Sicherungszapfen 10 in einer räumlichen Darstellung von innen.

Dabei sind einerseits an dem mit der Nut 9 versehenen Seitenteil 2 endseitig der Nut 9 ein mit der Ausfälzung 8 in Wirkverbindung tretender Sicherungszapfen 10 und andererseits an dem mit der Ausfälzung 8 versehenen Seitenteil 2 "gegenüberliegend" endseitig der Ausfälzung 8 ein weiterer mit der Nut 9 in Wirkverbindung tretender Sicherungszapfen 10 angeordnet.

Bei dieser Bauform wird während des Einschiebens des zweiten Seitenteiles in das zuerst montierte (mit der Ausfälzung 8 versehene) Seitenteil 2 das zuerst montierte Seitenteil 2 zunächst vollständig auf die diesem zugeordneten zylindrischen Dübel 3 aufgeschoben und dabei gleichzeitig rückwandseitig an die Seitenwand 12 der Aussparung 6 des Fußteiles gedrückt.

Mit dem Eintauchen des endseitig der Nut 9 angeordnete Sicherungszapfens 10 in die Ausfälzung 8 des zuerst montierten Seitenteiles 2 taucht während des Einschiebens des zweiten Seitenteiles gleichzeitig auch "gegenüberliegend" der zweite, endseitig der Ausfälzung 8 an dem mit der Ausfälzung 8 versehenen Seitenteil 2 angeordnete Sicherungszapfen 10 in die "sich über diesen hinwegschiebende" Nut, so dass dadurch das als zweites montierte Seitenteil 2 fest am Fußteil verspannt wird.

Mit dieser erfindungsgemäßen Verspannung der/des Sicherungszapfen/s 10 in der Ausfälzung 8 (ob nach Figur 4 oder nach Figur 2) werden gleichzeitig beide Seitenteile 2 an die in diese hineinragenden (in den Aussparungen 5 angeordneten) Dübel 3 gepresst, wodurch die erfindungsgemäß miteinander in form- und kraftschlüssigen Eingriff stehenden Bauteile sicher und spielfrei miteinander verspannt werden.

Der Endmontagezustand der beiden zuvor erläuterten Bauformen der erfindungsgemäßen Eckverbindung für ein metallfreies Massivholzbett ist in der Figur 3 räumlich von "Innen" dargestellt

Mittels der erfindungsgemäßen Lösung wird somit gewährleistet, dass jeder der Dübel 3 auf Scherung jedoch nie auf Biegung beansprucht werden.

Darüber hinaus werden die bei Bettgestellen auftretenden maximalen vertikalen Belastungen nie über die Verbindungselemente (wie beispielsweise die Dübel) sondern stets direkt von den Seitenteilen 2 "vollflächig" auf das Fußteil 1 übertragen.

Selbst eventuell auftretende Biegebelastungen werden infolge der erfindungsgemäßen Lösung stets großflächig von den miteinander in Wirkverbindung stehenden Bauteile übertragen.

Mittels der erfindungsgemäßen Eckverbindung kann bei minimalem Lagervolumen ein modularer Aufbau von Bettgestellen derart realisiert werden, dass beispielsweise in Hotelbetrieben die Gästebetten in unterschiedlichen Bettbreiten und Bettlängen entsprechend dem jeweiligen Bedarf einfach und schnell zusammengestellt werden können, ohne dass der Gast am Bettgestell optisch dessen "Zerlegbarkeit" bemerkt.

Die erfindungsgemäße Lösung ermöglicht dabei gleichzeitig eine einfache Montage und Demontage sowie zudem einen einfachen Transport und eine platzsparende Zwischenlagerung der einzelnen Bauteile.

Infolge der erfindungsgemäßen Lösung ist selbst von Laien eine mehrfache Demontage und Montage ohne Werkzeug jederzeit möglich.

Im zusammengebauten Zustand ist die erfindungsgemäße Eckverbindung zudem stets sehr hoch belastbar und weist selbst unter sehr extremen Belastungs- und Einsatzbedingungen auch nach mehrfachen Montagen und

Demontagen eine wesentlich höhere Lebensdauer gegenüber den bisherigen Lösungen des Standes der Technik auf.

Aufgrund der erfindungsgemäßen, optimalen spielfreien Verspannung wird zudem ein "Knarren" der erfindungsgemäßen Eckverbindung auch unter extremer dynamischer Belastung vermieden.

Darüber hinaus kann die erfindungsgemäße Eckverbindung auch maschinell mit ästhetisch ansprechender Gestaltung bei moderner, eleganter Formgebung sehr einfach und kostengünstig auch in Großserien hergestellt werden.

### Bezugszeichenzusammenstellung

- 1: Fußteil
- 2: Seitenteil
- 3: Dübel
- 4: Einstecköffnung
- 5: Führungsnut
- 6: Aussparung
- 7: Stirnseite
- 8: Ausfälzung
- 9: Nut
- 10: Sicherungszapfen
- 11: Außenwand
- 12: Seitenwand
- 13: Unterkante
- 14: Bodenfläche

## Patentansprüche

1. Eckverbindung für ein metallfreies Massivholzbett mit Fußteil (1) und zwei Seitenteilen (2) sowie im Fußteil (1) angeordneten Dübeln (3) und in den Seitenteilen, den Dübeln (3) des Fußteiles (1) zugeordnet angeordneten Einstecköffnungen (4) und/oder Führungsnuten (5), **dadurch gekennzeichnet,**
- **dass** am oberen Ende des Fußteiles eine kastenförmige Aussparung (6) angeordnet ist in deren Seitenwänden (12) jeweils ein oder mehrere Dübel (3) angeordnet sind, wobei an der Stirnseite (7) eines der beiden dem Fußteil (1) zugeordneten Seitenteile (2) eine in seiner Breite der Breite der Stirnseite (7) des anderen Seitenteiles (2) entsprechende Ausfälzung (8) angeordnet ist, und an der Stirnseite (7) des anderen Seitenteiles (2) eine Nut (9) angeordnet ist, und
- **dass** endseitig der Nut (9) an dem mit der Nut (9) versehenen Seitenteil (2) ein mit der Ausfälzung (8) in Wirkverbindung tretender Sicherungszapfen (10) angeordnet ist, oder dass einerseits endseitig der Nut (9) an dem mit der Nut (9) versehenen Seitenteil (2) ein mit der Ausfälzung (8) in Wirkverbindung tretender Sicherungszapfen (10) und andererseits "gegenüberliegend" endseitig der Ausfälzung (8) an dem mit der Ausfälzung (8) versehenen Seitenteil (2) ein weiterer mit der Nut (9) in Wirkverbindung tretender Sicherungszapfen (10) angeordnet ist, und
- **dass** an der Außenwand (11) des Seitenteiles (2) mit der stirnseitig angeordneten Ausfälzung (8) Einstecköffnungen (4) und/oder Führungsnuten (5) und an der Außenwand (11) des Seitenteiles (2) mit der stirnseitig angeordneten Nut (9) Führungsnuten (5) mit/ohne Einstecköffnung (4) angeordnet sind.

2. Eckverbindung für ein metallfreies Massivholzbett nach Anspruch 1, **dadurch gekennzeichnet, dass** als Dübel (3) zylindrische Dübel (3) eingesetzt werden, wobei an den Außenwänden (11) der Seitenteile (2) diesen zylindrischen Dübeln (3) zugeordnet Einstecköffnungen (4) / Führungsnuten (5) angeordnet sind.

3. Eckverbindung für ein metallfreies Massivholzbett nach Anspruch 1, **dadurch gekennzeichnet, dass** als Dübel (3) Gratdübel eingesetzt werden, und dass diesen Gratdübeln zugeordnet an den Außenwänden (11) der Seitenteile (2) Einstecköffnungen (4) angeordnet sind und diesen benachbart jeweils eine als Gratführung ausgebildete Führungsnut (5) angeordnet ist.

## Claims

1. Corner connection for a metal-free bed made of solid wood with a foot element (1) and two side elements (2) as well as dowels (3) placed in the foot element (1) and insertion openings (4) and/or guide grooves (5) placed in the side elements and associated with the foot element (1), **characterised by** the fact
• that a box shaped opening (6) is located at the upper end of the foot element with one, or several dowels placed in the side walls (12) of this opening with a mortise (8) whose width corresponds to the width of the front side (7) of the other side element (2) placed on the front side (7) of one of the two side elements (1) associated with the foot element (1) and
• that a safety dowel (10), actively connected with the mortise (8) is located at the end of the groove (9) on the side element (2) equipped with the groove (9) or that a safety dowel (10), actively connected to the mortise (8) is located at the end of the groove (9) on the side element (2) equipped with the groove on one hand, and that another safety dowel is located on the side element (2) equipped with the mortise (8) and "facing" the end of the mortise (8), on the other hand and
• that the insertion openings (4) and/or the guide grooves (5) are located on the exterior wall (11) of the side element (2) with the mortise (8) placed on the front side and that the guide grooves (3) with/without an insertion opening (5) are located on the exterior wall (11) of the side element (2) with the groove (9) placed on the front side.

2. Corner connection for a metal-free bed made of solid wood according to claim 1, **characterized by** the fact that cylindrical wooden dowels (3) are used as dowels (3) with insertion openings (4) and guide grooves (5) associated with these cylindrical dowels (3) placed on the exterior walls (1) of the side element (2).

3. Corner connection for a metal-free bed made of solid wood according to claim 1, **characterized by** the fact that ribbed dowels are used as dowels and that insertion openings (49) are located at these ribbed dowels on the exterior walls (11) of the side element (2) and that one guide groove (5) respectively used as a burr end guide is located in the proximity of these items.

## Revendications

1. Connexion angulaire pour un lit en bois massif dépourvu de métal avec élément de pied (1) et deux éléments latéraux (2) ainsi que des chevilles (3) placées dans l'élément de pied (1) et des ouvertures d'insertion (4) et/ou des rainures de guidage (5) placées dans les éléments latéraux et associées aux chevilles (3) de l'élément de pied (1), **caractérisée par le fait**
• **qu'**une ouverture en forme de boîte (6) est disposée à l'extrémité supérieure de l'élément de pied, une ou plusieurs chevilles (3) étant disposées dans les parois latérales (12) de cette ouverture, une battue (8) correspondant dans sa largeur à la largeur du côté frontal (7) de l'autre élément latéral (2) et étant disposée sur le côté frontal (7) de l'un des deux éléments latéraux (2) associé à l'élément de pied (1), et
• **que**, à l'extrémité de la rainure (9) sur l'élément latéral (2) équipé de la rainure (9), est disposée une cheville de sécurité (10) en liaison active avec la battue (8), ou bien que d'une part à l'extrémité de la rainure (9) sur l'élément latéral (2) équipé de la rainure (9) est disposée une cheville de sécurité (10) en liaison active avec la battue (8) et que d'autre part "en face" à l'extrémité de la battue (8) sur l'élément latéral (2) équipé de la battue (8) est associée une autre cheville de sécurité (10) en liaison active avec la rainure (9), et
• **que** des ouvertures d'insertion (4) et/ou des rainures de guidage (5) sont disposées sur la paroi extérieure (11) de l'élément latéral (2) avec la battue (8) placée du côté frontal et que des rainures de guidage (5) avec/sans ouverture d'insertion (4) sont disposées sur la paroi extérieure (11) de l'élément latéral (2) avec la rainure (9) placée du côté frontal.

2. Connexion angulaire pour un lit en bois massif dépourvu de métal selon l'exigence 1 **caractérisée par le fait que** des chevilles cylindriques (3) sont utilisées, des ouvertures d'insertion (4) / des rainures de guidage (5) associées à ces chevilles cylindriques (3) étant disposées sur les parois extérieures (11) de l'élément latéral (2).

3. Connexion angulaire pour un lit en bois massif dépourvu de métal selon l'exigence 1 **caractérisée par le fait que** des goujons sont utilisés comme chevilles (3) et que des ouvertures d'insertion (4) associées à ces goujons sont disposées sur les parois extérieures (11) de l'élément latéral (2) et qu'au voisinage de celles-ci respectivement une rainure de guidage utilisée comme guidage de bavure est disposée.
